# EUROPÄISCHE PATENTSCHRIFT

(11) **EP 3 772 368 B1**
(45) Veröffentlichungstag und Bekanntmachung des Hinweises auf die Patenterteilung: **11.12.2024**
(21) Anmeldenummer: 20184119.4
(22) Anmeldetag: 06.07.2020
(51) Int. Cl.: B01D 45/16, G01N 1/22, G01N 1/02

(54) **TRANSPORTABLE PARTIKELSAMMELVORRICHTUNG**
TRANSPORTABLE PARTICLE COLLECTING DEVICE
DISPOSITIF TRANSPORTABLE DE COLLECTE DE PARTICULES

(30) Priorität: 05.08.2019 DE 102019121105
(43) Veröffentlichungstag der Anmeldung: 10.02.2021
(73) Patentinhaber: CleanControlling GmbH, 78576 Emmingen-Liptingen (DE)
(72) Erfinder: BURGER, Volker, 78576 Emmingen-Liptingen (DE); ZWINKAU, Ronny, 78576 Emmingen-Liptingen (DE); BÄRG ISAAK, John Marc, 78576 Emmingen-Liptingen (DE)
(74) Vertreter: Patent- und Rechtsanwälte Behrmann Wagner PartG mbB

(56) Entgegenhaltungen:
- WO-A1-2012/150672
- DE-A1- 102017 124 265
- DE-B3- 102017 113 888
- GB-A- 2 254 024
- JP-A- H09 155 239
- US-A1- 2005 274 170
- US-A1- 2010 242 632
- PANTEA HADI JAFARI ET AL: "Turbulence Modelling of a Single-Phase Flow Cyclone Gasifier", ENGINEERING (ENG ), vol. 09, no. 09, 1 January 2017 (2017-01-01), pages 779 - 799, XP055753355, ISSN: 1947-3931, DOI: 10.4236/eng.2017.99047
- QIAN F ET AL: "Study of the natural vortex length of a cyclone with response surface methodology", COMPUTERS & CHEMICAL ENGINEERING, PERGAMON PRESS, OXFORD, GB, vol. 29, no. 10, 15 September 2005 (2005-09-15), pages 2155 - 2162, XP027759858, ISSN: 0098-1354, [retrieved on 20050915]
- JOSEPH MAJDALANI: "Helical solutions of the bidirectional vortex in a cylindrical cyclone: Beltramian and Trkalian motions", FLUID DYNAMICS RESEARCH, vol. 44, no. 6, 1 October 2012 (2012-10-01), pages 1 - 38, XP055753364, DOI: 10.1088/0169-5983/44/6/065506
- HSIAO T-C ET AL: "Development of mini-cyclones as the size-selective inlet of miniature particle detectors", JOURNAL OF AEROSOL SCIENCE, ELSEVIER, AMSTERDAM, NL, vol. 40, no. 6, 1 June 2009 (2009-06-01), pages 481 - 491, XP026090332, ISSN: 0021-8502, [retrieved on 20090201], DOI: 10.1016/J.JAEROSCI.2009.01.006
- L.C KENNY ET AL: "A DIRECT APPROACH TO THE DESIGN OF CYCLONES FOR AEROSOL-MONITORING APPLICATIONS", JOURNAL OF AEROSOL SCIENCE, vol. 31, no. 12, 1 December 2000 (2000-12-01), AMSTERDAM, NL, pages 1407 - 1420, XP055753508, ISSN: 0021-8502, DOI: 10.1016/S0021-8502(00)00047-1

## Beschreibung

Die vorliegende Erfindung betrifft eine Partikelsammelvorrichtung zum Sammeln von Partikeln von Oberflächen eines Prüfkörpers zur Bestimmung der technischen Sauberkeit nach dem Oberbegriff des Patentanspruchs 1.

Aus dem gattungsbildenden Stand der Technik sind von der Anmelderin vertriebene Partikelsammelvorrichtungen nach dem Oberbegriff des Patentanspruchs 1 vorbekannt, die bereits erfolgreich im Markt für die Bestimmung der technischen Sauberkeit von Prüfkörpern, wie etwa Werkstücken, Leiterplatten und/oder Batteriestacks vertrieben werden. Die bekannte Partikelsammelvorrichtung umfasst eine Ansaugleitung zum manuellen oder automatisierten Abfahren einer zu prüfenden Oberfläche des Prüfkörpers. Zum Herausfiltern der aufgesaugten Partikel aus dem Saugluftvolumenstrom mündet die Ansaugleitung zum Ausbilden eines Wirbelstroms tangential in einen einen vertikal ausgerichteten Rohrabschnitt umfassenden Fliehkraftabscheider. Hierzu weist der Rohabschnitt zum Umlenken des mit den Partikeln beladenen Saugluftvolumenstroms einen oberen Eintrittsbereich auf, der formschlüssig in einen unteren Abscheidebereich des Rohrabschnitts übergeht. Unter dem nach unten offenen Rohrabschnitt ist ein Auffangbehälter zum Sammeln der aus dem Saugluftvolumenstrom gesammelten Partikel angeordnet. Ferner ragt am oberen Ende des Rohrabschnitts ein Tauchrohr in den Rohrabschnitt, an dem, in Bezug auf den Rohrabschnitt am äußeren Ende eine Unterdruckversorgungsleitung zur saugluftleitenden Kopplung einer Unterdruckerzeugungsquelle angeschlossen ist.

Im Betrieb strömt der mit den von der Prüffläche des Prüfkörpers aufgesaugten Partikeln beladene Saugluftvolumenstrom als Partikel-/Luftvolumenstrom in den Rohrabschnitt des Fliehkraftabscheiders, wobei durch den inneren Rohrabschnitt im Eintrittsbereich der Saugluftvolumenstrom auf eine Kreisbahn umgelenkt wird. Hierbei bildet sich ein Wirbelstrom aus, wobei sich die Rotationsgeschwindigkeit durch den nach unten verjüngenden Konus erhöhen lässt. Wegen der auf die Partikel wirkenden massenabhängigen Zentrifugalkraft führt dies dazu, dass die Partikel im Saugluftvolumenstrom gegen den inneren Rohrabschnitt geschleudert werden, was zu einem Abreiben und Abschlagen der Ecken und Kanten der Partikel führt. Da die Partikel hierbei abgebremst werden, rieseln diese in den darunter angeordneten Auffangbehälter und können somit in einer nachgelagerten optischen Analyse auf Anzahl, Größe sowie Beschaffenheit untersucht und ausgewertet werden. Allerdings führt die im Saugluftvolumenstrom auf die Partikel wirkende hohe mechanische Belastung. Neben der negativen Beeinflussung und Veränderung der äußeren Beschaffenheit der Partikel, die zu einer homogenen Oberfläche zu Partikel führt, hat das Abschlagen der Ecken und Kanten auch den Nachteil, dass bei der Bestimmung der technischen Sauberkeit ein zu hoher Anteil an kleinkörnigen Partikeln erfasst wird. Zudem hat es sich in der Praxis gezeigt, dass es auch nach dem Sammeln der Partikel und dem Transportieren der Partikel zu einem Analyseort zu einer negativen Beeinflussung der Partikel kommt, was zu fehlerhaften Werten bei der Bestimmung der technischen Sauberkeit führt. Neben dem unzureichenden Reinigen des Auffangbehälters vor dem Starten einer neuen Messreihe beruht eine weitere Fehlerquelle auf der mangelnden Qualität eines Transportbehälters, weshalb entweder zusätzliche Partikel in den vorgesehenen Transportbehälter gelangen oder ein Teil der gesammelten Partikel während dem Transport zu einem Analyseort wieder verloren geht. Zudem führt auch der Transport der Partikel dazu, dass die Oberfläche der Partikel durch gegenseitiges Reiben und Aneinanderschlagen abgerieben und somit im Hinblick auf die nachgelagerte optische Analyse zur Bestimmung der technischen Sauberkeit negativ beeinflusst wird.

Weiterhin ist als gattungsbildender Stand der Technik die DE 2017 124 265 A1 der Anmelderin zu nennen. Ferner ist eine Partikelsammelvorrichtung aus der GB 2 254 024 A bekannt. Darüber hinaus sind die Druckschriften US 2010/ 242 632 A1 und US 2005/ 274 170 A1 zu nennen.

Die DE 10 2017 113 888 B3 zeigt einen Fliehkraftabscheider zur Trennung wenigstens zweier Phasen eines Fluids, mit einem spiralförmig durchströmbaren Grundgehäuse, das eine Separationskammer und ein Abscheidungsrohr aufweist. Dabei weist der Fliehkraftabscheider am Grundgehäuse eine obere tangentiale Einlassöffnung für das Fluid, sowie eine Leichtfraktionauslassöffnung aufweist, und am unteren Ende eine Schwerfraktionauslassöffnung. Dabei ist Fliehkraftabscheider in Richtung des unteren Endes verjüngt.

Die WO 2012/150672 A1 offenbart eine Erfassungsvorrichtung zum Nachweis biologischer Partiekl mit einem Lüfter, Kollektoren, eine Messvorrichtung und eine Steuervorrichtung. Die Kollektoren haben jeweils eine Zyklonform. Die Steuervorrichtung führt Luft in die Erfassungsvorrichtung derart ein, dass Partikel mit Durchmessern, die größer als der Trennpartikeldurchmesser sind, durch die Kollektoren abgeschieden werden. Anschließend werden durch Anlegen einer vorbestimmten Spannung an eine Entladungselektrode die abgeschiedenen Teilchen auf eine Oberfläche des Kollektorelements adsorbiert. Die Messvorrichtung misst die Menge der von lebenden Organismen stammenden Partikel auf der Oberfläche des Kollektorelements.

Die JP H09155 239 A zeigt einen miniaturisierten Zyklon mit einem Zyklonzylinder, der aus einem geraden Rohr und einem Trennteil besteht, das an dessen Bodenteil ausgebildet ist. Dabei werden Partikel in den Zyklonzylinder in tangentialer Richtung in einen oberen Zyklonzylinderteil eingeströmt, wobei durch die Verwirbelung und dem Eigengewicht die Partikel bis hin zu einer Trennplatte nach unten bewegt werden. Horizontal werden die Partikel von der Trennplatte dann in einen weiteren Zylinder gewirbelt wird. Am Außenumfangsteil der Trennplatte ist eine Schürze ausgebildet, um die Trennleistung zu erhöhen.

Ausgehend von dem vorgenannten Stand der Technik besteht die Aufgabe der Erfindung darin, eine gattungsbildende Partikelsammelvorrichtung im Hinblick auf die Qualität und Aussagekraft des Prüfergebnisses zu verbessern. Hierbei soll der Einfluss von das Messergebnis der Partikelsammelvorrichtung negativ beeinflussenden und/oder verfälschenden Störgrößen verringert werden, um auch in der Praxis eine konstant hohe Messqualität zu erreichen.

Die Aufgabe wird durch die Partikelsammelvorrichtung mit den Merkmalen des Patentanspruch 1 gelöst. Vorteilhafte Weiterbildungen der Erfindung sind in den Unteransprüchen beschrieben.

In erfindungsgemäß vorteilhafter Weise umfasst die erfindungsgemäße, insbesondere transportabel und/oder verfahrbar ausgebildete, Partikelsammelvorrichtung einen Fliehkraftabscheider, der dahingehend ausgebildet ist, dass es beim Trennen der Partikel von dem Partikel-/Luftvolumenstrom lediglich zu einer geringen mechanischen Belastung der Partikel kommt, wodurch ein Abrieb der Partikelaußenflächen und ein Abschlagen von Ecken und Kanten der Partikel verhindert wird. Hierfür wurde erfindungsgemäß vorteilhaft zunächst erkannt, dass zur Bestimmung der technischen Sauberkeit von Prüfkörpern, wie etwa Werkstücken, Leiterplatten und/oder Batteriestacks, Partikel mit einer Partikelgröße kleiner 5,0µm nicht erfasst und ausgewertet werden müssen. Daher weist der erfindungsgemäße Fliehkraftabscheider zum Ausbilden eines Wirbelstroms einen, einen oberen Eintrittsbereich sowie einen unteren Abscheidebereich ausbildenden Rohrabschnitt auf, der vertikal ausgerichtet ist, wobei in dem oberen Eintrittsbereich des Rohrabschnitts eine Ansaugleitung in den Rohrabschnitt tangential mündet. Ferner umfasst der Fliehkraftabscheider ein Tauchrohr, das entlang der Vertikalerstreckung bzw. Hocherstreckung des Rohrabschnitts ausgerichtet ist und zumindest bereichsweise in den Eintrittsbereich des Rohrabschnitts hineinragt und über eine Unterdruckversorgungsleitung zur Erzeugung des Saugluftvolumenstroms saugluftleitend mit einer Unterdruckerzeugungsquelle in Wirkverbindung steht.

Im Betrieb wird somit - wie es auch bei den gattungsbildenden Partikelsammelvorrichtungen üblich ist - durch die Unterdruckerzeugungsquelle ein Saugluftvolumenstrom erzeugt, um manuell oder mittels einer Handhabungsvorrichtung voll automatisiert die Oberfläche des Prüfkörpers (Werkstücke, Leiterplatten und/oder Batteriestacks) abzufahren und lösbare Partikel zur Bestimmung der technischen Sauberkeit von der Oberfläche aufzusaugen. Der in der Ansaugleitung strömende Partikel-/Luftvolumenstrom mündet in den Eintrittsbereich des Rohrabschnitts, wobei durch den inneren Rohrabschnitt der mit den Partikeln beladene Saugluftvolumenstrom zum Ausbilden eines Wirbelstroms umgelenkt wird. Hierbei sinkt der rotierende Partikel-/Luftvolumenstrom in den Abscheidebereich des Rohrabschnitts ab, der erfindungsgemäß vorteilhaft entweder als Hohlzylinder, insbesondere dann einstückig mit dem Eintrittsbereich als Leerrohr ausgebildet ist, oder als nach unten sich verjüngender Konus dahingehend ausgebildet ist, dass der Winkel zwischen den Mantellinien und der zentrischen Achse des Konus (in einem imaginären Schnittpunkt) in einem Bereich zwischen 0° bis 8°, ganz besonders bevorzugt zwischen 0° bis 4°, ganz besonders besonders bevorzugt bei 0° liegt. Mit anderen Worten ist es bevorzugt vorgesehen, dass der sich nach untern verjüngende Konus so ausgebildet ist, dass der Schnittwinkel zwischen einer Mantellinie des Konus und der zentrischen Achse des Konus kleiner gleich, insbesondere weniger, als 8°, ganz besonders bevorzugt 4° beträgt.

Alternativ ist auch eine Ausführungsform denkbar, die einen Abscheidebereich des Rohrabschnitts aufweist, der als sich nach unten aufweitender Konus ausgebildet ist. Hierbei ist es weiterbildend vorgesehen, dass der Winkel zwischen den Mantellinien und der zentrischen Achse des Konus (in einem imaginären Schnittpunkt) in einem Bereich zwischen 0° bis 15°, bevorzugt zwischen 0° bis 11°, besonders bevorzugt zwischen 0° bis 8°, ganz besonders bevorzugt zwischen 0° bis 4° liegt, wobei hier der imaginäre Schnittpunkt oberhalb des Konus angeordnet ist. Mit anderen Worten ist es bevorzugt vorgesehen, dass der sich nach untern aufweitende Konus so ausgebildet ist, dass der Schnittwinkel zwischen einer Mantellinie des Konus und der zentrischen Achse des Konus kleiner gleich, insbesondere weniger, als 15°, bevorzugt 11°, besonders bevorzugt 8°, ganz besonders bevorzugt 4° beträgt.

Hierdurch wird die auf die Partikel wirkende mechanische Belastung beim ständigen Aufprallen und Abbremsen der Partikel gegen den inneren Rohabschnitt im Wirbelstrom deutlich verringert, da durch den sich nur geringfügig verjüngenden Konus im Abscheidebereich oder durch den im Abscheidebereich ausgebildeten Hohlzylinder die Geschwindigkeit des erzeugten Wirbelstroms vorteilhaft begrenzt werden kann. Im Ergebnis werden somit die Partikel nicht nur kürzer, sondern auch mit einer geringeren Intensität gegen den inneren Rohrabschnitt geschleudert, weshalb es nicht zu einem Abrieb der Partikeloberfläche kommt. Ferner wird somit der Anteil an kleinkörnigen Partikeln durch abgeschlagene Partikelteile (Ecken und Kanten) auch nicht erhöht, was synergistisch eine weitere Störgröße bei der Bestimmung der technischen Sauberkeit eliminiert. Vorteilhaft ist es somit möglich, Partikel mit einer Partikelgröße größer 5µm, bevorzugt größer 10µm, weiter bevorzugt größer 15µm aus schonend aus dem Partikel-/Luftvolumenstrom herauszufiltern, wobei dieser Bereich gerade für die Bestimmung der technischen Sauberkeit besonders relevant ist.

In einer ersten Weiterbildung der Erfindung ist es vorteilhaft vorgesehen, dass der Auffangbehälter als austauschbare Einweg-Ware ausgebildet ist. Hierdurch wird es vorteilhaft ermöglicht, dass der Auffangbehälter zum zeitlich begrenzten Sammeln von Partikeln mittels eines erfindungsgemäßen Fliehkraftabscheiders als Messprobe eingesetzt wird, wobei nach dem entsprechenden Prüfvorgang der Auffangbehälter durch einen weiteren Auffangbehälter ausgetauscht wird. Dies ermöglicht den Auffangbehälter zeitlich entkoppelt von dem Betrieb der erfindungsgemäßen Partikelsammelvorrichtung durch entsprechende optische Analysemittel zur Bestimmung der technischen Sauberkeit auszuwerten. Ferner kann somit auch sichergestellt werden, dass beim Starten einer neuen Prüfreihe durch das Einlegen eines neuen, bisher unbenutzten Auffangbehälters keinerlei Partikel bereits vor dem Starten im Auffangbehälter enthalten sind. Durch die Kennzeichnung des entsprechenden Auffangbehälters sowie der damit - eventuell nur strichprobenartig oder bereichsweise gereinigten Prüfkörper - kann somit auch nachträglich mit einer zu hohen Anzahl an Partikeln verunreinigte Prüfkörper identifiziert werden, um eine Entsorgung oder Reinigung durchzuführen.

Erfindungsgemäß ist es vorgesehen, dass der Auffangbehälter eine horizontal ausgerichtete Sammelfläche zum Aufnehmen der im Betrieb der erfindungsgemäßen Partikelsammelvorrichtung aus dem Fliehkraftabscheider rieselnden Partikel aufweist, wobei auf der Sammelfläche ein chemisch wirkendes Haftmittel aufgetragen und/oder vorgesehen ist. Durch die als chemisch wirkender Klebstoff ausgebildete Haftmittel können die aus dem Fliehkraftabscheider rieselnden Partikel auf ihrer ursprünglichen (Lande-)Position auf der Sammelfläche fixiert werden. In diesem Zusammenhang ist es als besonders vorteilhaft zu erwähnen, dass die gleichmäßige - und somit für die optische Analyse der Partikel in Bezug auf Anzahl, Größe und Beschaffenheit vorteilhafte - Verteilung der Partikel auf der Sammelfläche erhalten werden kann. Ferner verhindert das Fixieren der einzelnen Partikel auf der Sammelfläche das Ausbilden von Partikelanhäufungen und von durch eine Mehrzahl von Partikeln ausgebildete Partikelklumpen, wodurch die Bestimmung der technischen Sauberkeit verfeinert werden kann bzw. zeit- und kostenaufwendige Aufbereitungsprozesse zum Trennen und Verteilen der Partikel wegfallen können. Zudem verhindern die Haftmittel auch, dass es beim Transport des Auffangbehälters zu einem Analyseort, insbesondere mittels eines externen Postdienstleistungsunternehmens, zu einem gegenseitigen Abrieb von Ecken und Kanten der Partikel kommt, was auch zu einer negativen Beeinflussung bei der Bestimmung der technischen Sauberkeit führen würde.

Eine Weiterbildung der erfindungsgemäßen Partikelsammelvorrichtung umfasst zum vollständigen Verschließen des Auffangbehälters Abdeckmittel, die in einem Transportzustand des Auffangbehälters formschlüssig auf der Partikelsammelvorrichtung angeordnet werden können. Hierdurch kann es vorteilhaft vermieden werden, dass es während dem Transport, also außerhalb der durch den Messzustand in der erfindungsgemäßen Partikelsammelvorrichtung bestimmten Mess- und/oder Prüfzeit zur Bestimmung der technischen Sauberkeit, durch von außen kommende zusätzliche Partikel zu einer Verunreinigung der gesammelten Partikel kommt. Vorteilhaft ist es in diesem Zusammenhang vorgesehen, dass die Abdeckmittel dahingehend ausgebildet sind, dass sie während der Messzeit und/oder Prüfzeit, also im Messzustand des Auffangbehälters, unter dem Auffangbehälter formschlüssig anordnenbar sind, wobei sich durch das formschlüssige Anordnen der Abdeckmittel auf dem Auffangbehälter während der Mess- und/oder Prüfzeit keine Partikel an den Innenflächen der Abdeckmittel festsetzen können, die andernfalls beim Verschließen des Auffangbehälters mit den Abdeckmitteln zu einer zusätzlichen Verunreinigung des Sammelbehälters bzw. insbesondere der Sammelfläche, führen würden.

Weiterbildend ist es zudem vorgesehen, dass der Auffangbehälter Fixiermittel zum Fixieren der Abdeckmittel im Transportzustand und insbesondere auch im Messzustand aufweist. Hierbei sind als Gewinde oder Rastmittel ausgebildete Fixiermittel besonders bevorzugt. Alternativ können die Fixiermittel auch durch einen Klebstoff ausgebildet sein, wobei nach dem Verschließen des Auffangbehälters mit den Abdeckmittel das Öffnen durch Zerstörung des Auffangbehälters und/oder der Abdeckmittel, insbesondere an einer Sollbruchstelle und/oder durch Spezialwerkzeug, möglich ist. Alternativ ist ein Wiederöffnen auch durch eine chemische oder thermische Behandlung vorteilhaft möglich, um die Abdeckmittel wieder von dem Auffangbehälter zu lösen. Dies verhindert vorteilhaft, dass sich während einem Transport des Auffangbehälters zu einem Analyseort die Abdeckmittel von dem Auffangbehälter lösen und somit zusätzliche Partikel in den Auffangbehälter gelangen, was auch eine negative Beeinflussung des Messergebnisses zur Folge hätte.

Schließlich ist im Rahmen der Erfindung auch eine Weiterbildung der Partikelsammelvorrichtung dahingehend vorgesehen, dass der Auffangbehälter eine Hocherstreckung zwischen 0,5cm bis 5cm, bevorzugt zwischen 0,5cm bis 2,5cm und/oder eine Quer- und/oder Längserstreckung und/oder Radialerstreckung zwischen 2cm bis 15cm, bevorzugt zwischen 4cm bis 10cm aufweist. Es hat sich nämlich als vorteilhaft herausgestellt, dass eine solche Erstreckung und/oder Ausgestaltung des Auffangbehälters besonders vorteilhaft ist, da er zum einen für die im Rahmen der technischen Sauberkeit erfassten Partikel eine ausreichend große Sammelfläche bereitstellt und gleichzeitig auch im Alltag, also in der Praxis, gut handhabbar ist, was auch an der Eignung zum Versenden der Messprobe mit einem Postdienstleistungsunternehmen an einen Analyseort begründet ist.

Ferner ist es weiterbildend vorgesehen, dass der Auffangbehälter und/oder die Abdeckmittel aus einem Kunststoffmaterial, insbesondere transparent, ausgebildet ist/sind. Vorteilhaft ermöglicht die transparente Ausgestaltung des Auffangbehälters das Durchführen einer schnellen Sichtprobe durch Prüf- und/oder Messpersonal, um während dem Ansaugen von Partikeln mittels der erfindungsgemäßen Partikelsammelvorrichtung den Verschmutzungsgrad bzw. den Zustand des Auffangbehälters, insbesondere die Anzahl der Partikel auf der Sammelfläche, grob zu erfassen bzw. abzuschätzen. Diese vorteilhafte Ausgestaltung des Auffangbehälters soll es bevorzugt sowohl im Messzustand als auch im Transportzustand ermöglichen, die die Anzahl von Partikeln auf der Sammelfläche einzusehen.

Weiterbildend ist es in diesem Zusammenhang auch vorteilhaft vorgesehen, dass die Sammelfläche und/oder die Haftmittel für eine optische Sichtprüfung zur Bestimmung und/oder Abschätzung der Anzahl von Partikeln im Auffangbehälter und/oder auf der Sammelfläche, eine weiße oder schwarze Kontrastfärbung aufweist/en. Hierbei kann bei farblich abweichenden Partikeln die Sichtprüfung sowie die am Analyseort durchgeführte optische Analyse verbessert werden, wodurch zusätzlich das Prüfergebnis bei der Bestimmung der technischen Sauberkeit verbessert werden kann.

Schließlich ist es im Rahmen der Erfindung auch vorgesehen, dass der Auffangbehälter eine ein Boden- und/oder Etagenelement umfassende hohlzylindrische oder kegelförmige Mantelfläche ausbildet, wobei durch die Innenfläche des Boden- oder Etagenelements die Sammelfläche zur Aufnahme der aus dem Fliehkraftabscheider herausrieselnden Partikel ausgebildet wird, die insbesondere die Haftmittel umfasst. Dies ermöglicht eine kostengünstige Realisierung eines insbesondere als Einweg-Ware ausgebildeten, Auffangbehälters, wobei weiterbildend auch die Abdeckmittel dahingehend ausgebildet sein können, dass diese formschlüssig auf die Ober- und Unterseite des Auffangbehälters angeordnet werden können.

Weitere Vorteile, Merkmale und Einzelheiten der Erfindung ergeben sich aus der nachfolgenden Beschreibung bevorzugter Ausführungsbeispiele sowie anhand der Zeichnungen.

Diese zeigen in:
- Fig. 1:: eine schematische Seitenschnittansicht von einem erfindungsgemäßen Fliehkraftabscheider einer ersten bevorzugten Ausführungsform der erfindungsgemäßen Partikelsammelvorrichtung, in
- Fig. 2:: eine schematische Seitenschnittansicht von einem erfindungsgemäßen Fliehkraftabscheider einer zweiten bevorzugten Ausführungsform der erfindungsgemäßen Partikelsammelvorrichtung und in
- Fig. 3:: eine Explosionsdarstellung einer bevorzugten Ausführungsform eines Auffangbehälters zur Verwendung in einer erfindungsgemäßen Partikelsammelvorrichtung.

In den Figuren sind funktionsgleiche oder zueinander äquivalente Elemente und Baugruppen mit den gleichen Bezugszeichen gekennzeichnet.

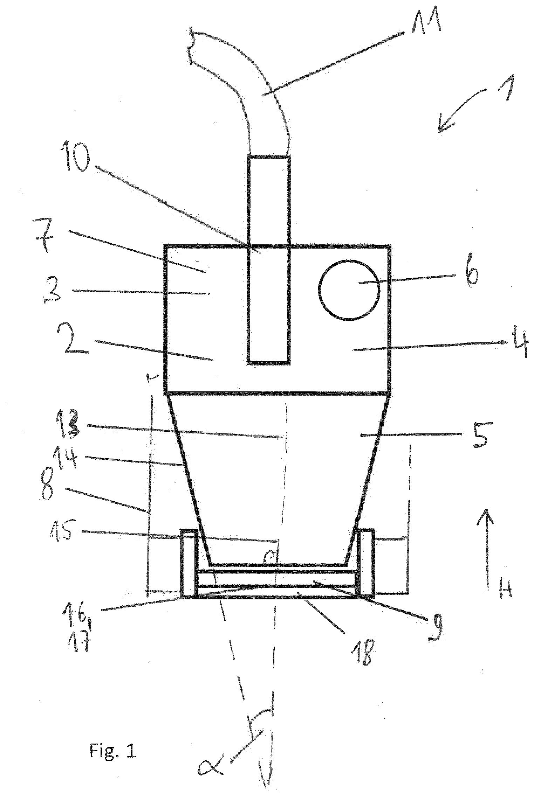

Die Fig. 1 zeigt in einer schematischen Seitenschnittansicht eine erfindungsgemäße Partikelsammelvorrichtung 1 zum Sammeln von Partikeln von Oberflächen für eine Partikelanalyse im Rahmen der Prüfung der technischen Sauberkeit von Prüfkörpern, wie etwa Werkstücke, Leiterplatten und/oder Batteriestacks. Zum Erzeugen des Saugluftvolumenstroms umfasst die dargestellte Ausführungsform der Partikelsammelvorrichtung 1 eine nicht in der Fig. 1 grafisch dargestellte Unterdruckerzeugungsquelle, die über eine teilweise grafisch dargestellte Unterdruckversorgungsleitung 11 mit einem Fliehkraftabscheider 2 der erfindungsgemäßen Partikelsammelvorrichtung 1 in Wirkverbindung steht. Hierzu ragt ein Tauchrohr 10 zumindest bereichsweise in den Fliehkraftabscheider 2. Zudem umfasst der Fliehkraftabscheider 2 einen vertikal angeordneten Rohrabschnitt 3, der einen Eintrittsbereich 4 sowie einen Abscheidebereich 5 aufweist, wobei in den Eintrittsbereich 4 des Rohrabschnitts 3 eine Ansaugleitung 6 tangential mündet, die anderenends eine nicht grafisch dargestellte Saugdüse zum Abfahren und Aufsaugen der Partikel von der Oberfläche des Prüfkörpers (Werkstück, Leiterplatte und/oder Batteriestacks) umfasst.

Ferner ist relativ zu einem Umgehäuse 8 der erfindungsgemäßen Partikelsammelvorrichtung 1 ein Auffangbehälter 9 lösbar angeordnet, der zum Aufnehmen von aus dem Fliehkraftabscheider 2 rieselnden Partikeln eine horizontal ausgerichtete Sammelfläche 16 aufweist, auf der chemisch wirkende Haftmittel 17 vorgesehen sind. Darüber hinaus umfasst der Auffangbehälter 9 zum vollständigen Verschließen des Auffangbehälters 9 in einem Transportzustand Abdeckmittel 18, wobei diese dahingehend ausgebildet sind, dass sich die Abdeckmittel 18 im dargestellten Messzustand formschlüssig unter dem Auffangbehälter 9 anordnen lassen.

Zum einen ermöglicht dies das sichere Aufbewahren der Abdeckmittel 18 während dem Betrieb der Partikelsammelvorrichtung 1 und zum anderen verhindert das formschlüssige Anordnen der Abdeckmittel 18 eine Kontaminierung der Innenflächen der Abdeckmittel 18 mit zusätzlichen (Schmutz-)Partikeln, was eine negative Beeinflussung bzw. Verfälschung des Prüfergebnisses (Anzahl, Größe sowie Beschaffenheit der mittels der erfindungsgemäßen Partikelsammelvorrichtung 1 erfassten Partikel) zur Folge hätte.

Im Betrieb wird mittels der nicht grafisch dargestellten Unterdruckerzeugungsquelle ein Saugluftvolumenstrom erzeugt, der das Ansaugen von Partikeln mittels der Ansaugleitung 6 ermöglicht. Der Partikel-/Luftvolumenstrom strömt tangential in den vertikal ausgerichteten Rohrabschnitt 3 des Fliehkraftabscheiders 2, wobei er durch den inneren Rohrabschnitt 7 dahingehend umgelenkt wird, dass sich ein Wirbelstrom im Fliehkraftabscheider 2 ausbildet. Aufgrund der auf die Partikel wirkenden Fliehkraft (Zentrifugalkraft) werden die Partikel gegen den inneren Rohrabschnitt 7 geschleudert und somit abgebremst, wobei diese dann in den unter dem Rohrabschnitt 3 vorgesehenen Auffangbehälter 9 rieseln. Durch den sich verjüngenden Konus 13 im Abscheidebereich 5 des Rohrabschnitts 3 kann die Rotationsgeschwindigkeit des Luftvolumenstroms zusätzlich erhöht werden, wodurch die Fliehkraft vergrößert wird und auch kleiner Partikel aus dem Luftvolumenstrom gefiltert werden. Allerdings ist der Konus 13 erfindungsgemäß vorteilhaft dahingehend ausgestaltet, dass im Wirbelstrom nicht zu hohe Geschwindigkeiten entstehen, da dies aufgrund des Abschlagen von Ecken und Kanten der Partikel (mechanische Beanspruchung) zu einer negativen Beeinträchtigung bei der Analyse zur Bestimmung der technischen Sauberkeit führt.

Im Rahmen der Erfindung ist es in diesem Zusammenhang vorgesehen, die Ausbildung des Wirbelstroms dahingehend zu beschränken, dass es nicht zu einer negativen Beeinflussung der aufgesaugten Partikel kommt. Hierbei soll ein Abrieb von Ecken und Kanten beim Herausfiltern der Partikel im Fliehkraftabscheider 2 vermieden werden. Ermöglicht wird dies erfindungsgemäß vorteilhaft, indem der den Abscheidebereich 5 ausbildende Konus 13 dahingehend ausgestaltet ist, dass der Winkel α zwischen den Mantellinien 14 des Konus 13 (im Abscheidebereich 5) und der zentrischen Achse 15 des Konuses 13 bzw. in der in Fig. 1 dargestellten Variante der zentrischen Achse des Rohrabschnitts 3 Wert von lediglich 9° aufweist.

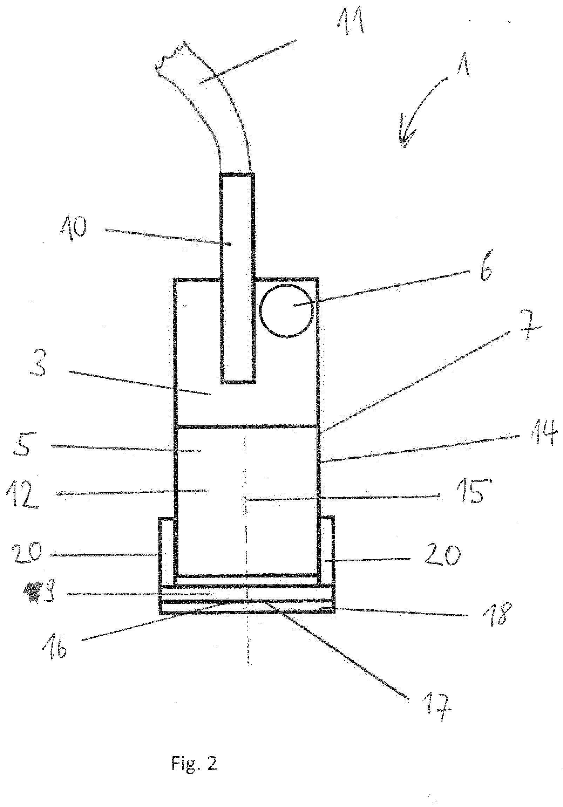

Auch in der Fig. 2 ist in einer schematischen Seitenschnittansicht der Aufbau einer weiteren bevorzugten Ausführungsform der erfindungsgemäßen Partikelsammelvorrichtung 1 dargestellt. Im Unterschied zu der aus der Fig. 1 bekannten Ausführungsform umfasst die nunmehr dargestellte Variante einen Abscheidebereich 5 des Rohrabschnitts 3, der als Hohlzylinder 12 ausgebildet ist. Mit anderen Worten beträgt der nicht in der Fig. 2 eingezeichnete Winkel α zwischen den Mantellinien 14 des Hohlzylinders 12 (im Abscheidebereich 5) und der zentrischen Achse 15 des Hohlzylinders 12 bzw. des Rohrabschnitts 3 0°, da diese parallel zueinander verlaufen und sich somit nicht schneiden. Diese zum Herausfiltern von kleinkörnigen Partikeln nachteilige Auslegung des Fliehkraftabscheiders 2 ermöglicht eine besonders schonendes Herausfiltern von großen Partikeln aus dem Partikel-/Luftvolumenstrom, da die Partikel beim Durchströmen des Abscheidebereichs 5 nicht mit einer wesentlich höheren Geschwindigkeit gegen den inneren Rohrabschnitt 7 geschleudert werden, wie es bei einer konusförmigen Auslegung (etwa entsprechend der Fig. 1) der Fall wäre. Dennoch kann gerade ein derartige Auslegung im Hinblick auf eine Analyse der technischen Sauberkeit für grobkörnige Partikel besonders vorteilhaft sein, da es aufgrund der geringen Geschwindigkeiten im Wirbelstrom nicht zum Abschlagen der Ecken und Kanten der Partikel kommt, weshalb die ursprüngliche Beschaffenheit der Partikel, insbesondere im Bezug auf die Oberfläche, erhalten bleibt. Zudem ist der als Einweg-Ware aus einem transparenten Kunststoff ausgebildete Auffangbehälter 9 über ein Verschlusselement 20 lösbar am Fliehkraftabscheider 2 angeordnet, um die Haftmittel 17 aufweisende Sammelfläche 16 relativ zum Fliehkraftabscheider 2 anzuordnen.

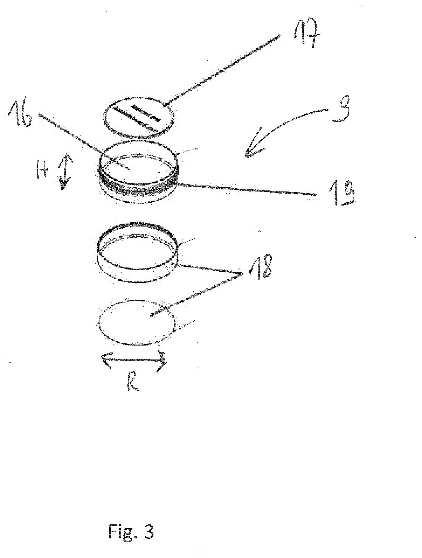

In der Fig. 3 ist eine Explosionszeichnung einer bevorzugten Ausführungsform des Auffangbehälters 9 dargestellt. Die Fig. 3 verdeutlicht, dass der Auffangbehälter 9 eine Hocherstreckung H von etwa 1cm aufweist und als Hohlzylinder mit einem zur Ausbildung der Sammelfläche 16 vorgesehenen Bodenelement ausgestaltet ist. Ferner kann der Auffangbehälter 9 durch aus zwei Teilen zusammengesetzte Abdeckmittel 18 in einem Transportzustand vollständig verschlossen werden, um den Auffangbehälter mit den darin enthaltenen Partikeln sicher an einen Analyseort zu transportieren. Hierzu sind zusätzlich als Rastmittel ausgebildete Fixiermittel 19 vorgesehen, die ein versehentliches Öffnen der Abdeckmittel beim Transport verhindern sollen. Hierdurch wird vorteilhaft verhindert, dass während dem Transport die aus dem Saugluftvolumenstrom mittels des Fliehkraftabscheiders 2 herausgefilterten Partikel aus dem Auffangbehälter 9 verloren gehen können. Ferner gewährleisten die Abdeckmittel 18 auch, dass keine zusätzlichen (Schmutz-)Partikel während dem Transport in den Auffangbehälter 9 gelangen. Darüber hinaus kann durch die vorteilhaften Haftmittel 17 die beim Herausrieseln der Partikel aus dem Fliehkraftabscheider 16 ursprüngliche Position auf der Sammelfläche 16 erhalten bleiben. Neben dem vollständigen Vermeiden von dem Aubilden von, für eine optische Analyse der Partikelgröße, Anzahl und Beschaffenheit nachteiligen Partikelklumpen und/oder Partikelanhäufungen verhindert dies auch das gegenseitige Abschlagen von Ecken und Kanten der herausgefilterten Partikel bei einem Transportvorgang, um beispielsweise eine volle Partikelsammelvorrichtung an einen Analyseort mittels eines externen Postdienstleistungsunternehmens zu versenden.

Im Ergebnis ermöglicht die vorliegende Erfindung auf überraschend einfache Art die Bereitstellung einer Partikelsammelvorrichtung die sich im besonderen Maße für das Sammeln von Partikeln von Oberflächen zur Bestimmung der technischen Sauberkeit eignet.

### Bezugszeichen

- 1.: Partikelsammelvorrichtung
- 2.: Fliehkraftabscheider
- 3.: Rohrabschnitt
- 4.: Eintrittsbereich
- 5.: Abscheidebereich
- 6.: Ansaugleitung
- 7.: inneren Rohrabschnitt
- 8.: Umgehäuse
- 9.: Auffangbehälter
- 10.: Tauchrohr
- 11.: Unterdruckversorgungsleitung
- 12.: Hohlzylinder
- 13.: Konus
- 14.: Mantellinien
- 15.: zentrischen Achse
- 16.: Sammelfläche
- 17.: Haftmittel
- 18.: Abdeckmittel
- 19.: Fixiermittel
- 20.: Verschlusselement

- α:: Winkel
- R:: Radialerstreckung
- H:: Hocherstreckung

## Patentansprüche

1. Partikelsammelvorrichtung (1) zum Sammeln von Partikeln von Oberflächen für eine Partikelanalyse im Rahmen der Prüfung der technischen Sauberkeit von Prüfkörpern, insbesondere Werkstücken, Leiterplatten und/oder Batteriestacks, mit einem Umgehäuse (8) und einem Fliehkraftabscheider (2), der zum Ausbilden eines Wirbelstroms einen vertikal verlaufenden Rohrabschnitt (3) umfasst, wobei der Rohrabschnitt (3) in einem Eintrittsbereich (4) eine Ansaugleitung (6) zum Ansaugen eines mit Partikeln beladenen Luftgemisches von einer zu prüfenden Oberfläche eines Prüfkörpers dahingehend umfasst, dass ein angesaugter Partikel-/Luftvolumenstrom im Rohrabschnitt (3) zum Ausbilden eines Wirbelstroms rotiert und in einen Abscheidebereich (5) des Rohrabschnitts (3) absinkt, wobei die Partikel gegen den inneren Rohrabschnitt (7) schleuderbar und somit von dem Luftvolumenstrom abscheidbar sind, weiter umfassend einen lösbar am Fliehkraftabscheider (2) oder dem Umgehäuse (8) fixierten Auffangbehälter (9) zum Sammeln der abgeschiedenen Partikel in einem Messzustand des Auffangbehälters (9), sowie ein am Fliehkraftabscheider (2) angeordnetes Tauchrohr (10) an dem eine Unterdruckversorgungsleitung (11) zum Erzeugen des Luftvolumenstroms zum Ansaugen der Partikel angeschlossen ist, wobei der Abscheidebereich (5) als ein Hohlzylinder (12) oder ein sich nach unten verjüngender oder erweiternder Konus (13) dahingehend ausgebildet ist, dass der Winkel (α) zwischen den Mantellinien (14) und der zentrischen Achse (15) des Hohlzylinders (12) oder Konus (13) in einem imaginären Schnittpunkt in einem Bereich zwischen 0° bis 8°, ganz besonders bevorzugt zwischen 0° bis 4°, ganz besonders bevorzugt bei 0° liegt, **dadurch gekennzeichnet, dass** der Auffangbehälter (9) eine Sammelfläche (16) ausbildet, die zum Fixieren der abgelagerten Partikel chemisch wirkende Haftmittel (17) aufweist.

2. Partikelsammelvorrichtung nach Anspruch 1,
**dadurch gekennzeichnet, dass** der Auffangbehälter (9) als austauschbare Einweg-Ware ausgebildet ist.

3. Partikelsammelvorrichtung nach Anspruch 1 oder 2,
**dadurch gekennzeichnet,**
**dass** der Auffangbehälter (9) Abdeckmittel (18) umfasst, wobei die Abdeckmittel (18) in dem Messzustand dahingehend formschlüssig unter dem Auffangbehälter (9) anordnenbar sind, dass sich keine Partikel auf die Innenfläche der Abdeckmittel (18) ablagern und/oder festsetzen können und wobei die Abdeckmittel (18) in einem Transportzustand des Auffangbehälters (9) dahingehend auf dem Auffangbehälter (9) anordnenbar sind, dass sich keine zusätzlichen Partikel in den Auffangbehälter (9), insbesondere auf der Sammelfläche (16), ablagern und/oder festsetzen können.

4. Partikelsammelvorrichtung nach dem Anspruch 3,
**dadurch gekennzeichnet,**
**dass** der Auffangbehälter (9) Fixiermittel (19) zum Fixieren der Abdeckmittel (18) auf dem Auffangbehälter (9) im Transportzustand aufweist.

5. Partikelsammelvorrichtung nach einem der Ansprüche 1 bis 4,
**dadurch gekennzeichnet,**
**dass** der Auffangbehälter (9) eine Hocherstreckung (H) zwischen 0,5cm bis 5cm, bevorzugt zwischen 0,5cm bis 2,5cm und/oder eine Quer- und/oder Längserstreckung und/oder Radialerstreckung (R) zwischen 2cm bis 15cm, bevorzugt zwischen 4cm bis 10cm aufweist.

6. Partikelsammelvorrichtung nach einem der Ansprüche 1 bis 5,
**dadurch gekennzeichnet,**
**dass** der Auffangbehälter (9) aus einem Kunststoffmaterial, insbesondere aus einem Plastomermaterial, hergestellt ist und/oder transparent ausgebildet ist.

7. Partikelsammelvorrichtung nach einem der Ansprüche 3 bis 6,
**dadurch gekennzeichnet,**
**dass** die Abdeckmittel (18) aus einem Kunststoffmaterial, insbesondere aus einem Plastomermaterial, hergestellt sind und/oder transparent ausgebildet sind.

8. Partikelsammelvorrichtung nach einem der Ansprüche 1 bis 7,
**dadurch gekennzeichnet,**
**dass** die Sammelfläche (16) und/oder die Haftmittel (17) für eine optische Sichtprüfung zur Bestimmung der Anzahl an Partikeln eine weiße oder schwarze Kontrastfärbung aufweisen.

9. Partikelsammelvorrichtung nach einem der Ansprüche 1 bis 7,
**dadurch gekennzeichnet,**
**dass** der Auffangbehälter (9) eine ein Boden- und/oder Etagenelement (20) umfassende hohlzylindrische oder kegelförmige Mantelfläche (21) ausbildet, wobei die Innenfläche des Boden- bzw. Etagenelements die Sammelfläche (16) aufweist.

## Claims

1. A particle-collecting device (1) for collecting particles from surfaces for particle analysis in the context of testing the technical cleanliness of test bodies, in particular work pieces, conductor boards and/or battery stacks, with a casing (8) and a centrifugal force separator (2), which comprises a vertical pipe section (3) for forming a whirlpool, wherein the pipe section (3) comprises a suction pipe (6) in a entry area (4) which is intended for suctioning a particle-laden air mixture from a surface of a test body to be tested in such a manner that an aspirated particle/air volume flow rotates in the pipe section (3) in order to form a whirlpool and sinks into a separation area (5) of the pipe section (3), wherein the particles are centrifuged against the inner pipe section (7) and is thus separated from the air volume flow, the particle-collecting device (01) further comprising a collection container (9) detachably fixed to the centrifugal force separator (2) or the casing (8) in order to collect the separated particles in a measuring state of the collection container (9), and a submersion pipe (10), which is disposed on the centrifugal force separator (2) and to which a negative-pressure supply pipe (11) for generating the air volume flow for suctioning the particles is connected, wherein the separation area (5) is designed as a hollow cylinder (12) or a downwardly tapering or widening cone (13) in such a manner that the angle (α) between the generators (14) and the centric axis (15) of the hollow cylinder (12) or cone (13) at an imaginary point of intersection is in a range between 0° to 8°, most preferably between 0° and 4°, most preferably at 0°,
**characterized in that**
the collection container (9) forms a collection surface (16), which has chemically acting adhesion means (17) for fixing the deposited particles.

2. The particle-collecting device according to claim 1,
**characterized in that**
the collection container (9) is designed as an exchangeable disposable article.

3. The particle-collecting device according to claim 1 or 2,
**characterized in that**
the collection container (9) comprises covering means (18), wherein the covering means (18) is disposed in a form-fitting manner under the collection container (9) in the measuring state in such a manner that no particles are deposited and/or settled on the inner surface of the covering means (18), and wherein the covering means (18) is disposed on the collection container (9) in a transport state of the collection container (9) in such a manner that no additional particles are deposited and/or settled in the collection container (9), in particular on the collection surface (16).

4. The particle-collecting device according to claim 3,
**characterized in that**
the collection container (9) has fixation means (19) for fixing the covering means (18) on the collection container (9) in the transport state.

5. The particle-collecting device according to claim 1 to 4,
**characterized in that**
the collection container (9) has a height (H) between 0.5 cm to 5 cm, preferably between 0.5 cm to 2.5 cm and/or a width and/or length and/or radial extension (R) between 2 cm to 15 cm, preferably between 4 cm to 10 cm.

6. The particle-collecting device according to claim 1 to 5,
**characterized in that**
the collection container (9) is made of a plastic material, in particular of a plastomer material, and/or is transparent.

7. particle-collecting device according to claim 3 to 6,
**characterized in that**
the covering means (18) is made of a plastic material, in particular of a plastomer material, and/or is transparent.

8. The particle-collecting device according to claim 1 to 7,
**characterized in that**
the collection surface (16) and/or the adhesion means (17) have a white or black contrast coloration for an optical visual inspection to determine the number of particles.

9. The particle-collecting device according to claim 1 to 7,
**characterized in that**
the collection container (9) forms a hollow-cylindrical or conical jacket surface (21) comprising a bottom element and/or tier element (20), wherein the inner surface of the bottom element and/or tier element comprises the collection surface (16).

## Revendications

1. Dispositif (1) pour collecter de particules de surfaces pour une analyse des particules dans le cadre de l'essai pour la propreté technique de corps d'essai, notamment des pièces à travailler, des plaques conducteurs et/ou des ensembles de batterie, ayant un boîtier (8) et un séparateur de cyclone (2), qui comprend une zone de tuyau (3) verticale pour former un tourbillon, dans lequel la zone de tuyau (3) dans une zone d'entrée (4) comprend un tuyau d'aspiration (6) pour aspirer un mélange d'air chargé de particules à partir d'un corps d'essai à être testé de telle sorte qu'un flux de volume de particules/d'air aspiré tourne dans la zone de tuyau (3) pour former un tourbillon et s'enfonce dans une zone de séparation (5) de la zone de tuyau (3), dans lequel les particules sont centrifugées contre la zone de tuyau (7) intérieure et sont ainsi séparées du flux de volume d'air, le dispositif (1) pour collecter de particules comprenant en outre un conteneur de collection (9) fixé de manière amovible au séparateur de cyclone (2) ou au boîtier (8) pour collecter les particules séparées dans un état de mesure du conteneur de collection (9), et un tuyau de plongé (10) qui est disposé sur le séparateur de cyclone (2) et auquel est connecté un tuyau (11) d'alimentation en pression négative pour générer le flux de volume d'air pour l'aspiration des particules, dans lequel la zone de séparation (5) est conçue comme un cylindre creux (12) ou un cône (13) s'amincissant ou s'élargissant vers le bas de telle sorte que l'angle (α) entre les génératrices (14) et l'axe centrique (15) du cylindre creux (12) ou du cône (13) à un point d'intersection imaginaire est compris entre 0° à 8°, de préférence entre 0° à 4°, de préférence à 0°,
**caractérisé en ce que**
le conteneur de collection (9) forme une surface de collection (16) qui a des moyens d'adhérence (17) agissant chimiquement pour fixer les particules déposées.

2. Dispositif pour collecter de particules selon la revendication 1,
**caractérisé en ce que**
le conteneur de collection (9) est conçu comme un article jetable interchangeable.

3. Dispositif pour collecter de particules selon la revendication 1 ou la revendication 2,
**caractérisé en ce que**
le conteneur de collection (9) comprend des moyens de couvercle (18), dans lequel les moyens de couvercle (18) est disposé de manière à s'adapter à la forme sous le conteneur de collection (9) dans l'état de mesure de manière à ce qu'aucune particule ne se dépose sur la surface intérieure des moyens de couvercle (18), et dans lequel les moyens de couvercle (18) est disposé sur le conteneur de collection (9) dans un état de transport du conteneur de collection (9) de manière à ce qu'aucune particule supplémentaire ne se dépose dans le conteneur de collection (9), notamment sur la surface de collection (16).

4. Dispositif pour collecter de particules selon la revendication 3,
**caractérisé en ce que**
le conteneur de collection (9) a des moyens de fixation (19) pour la fixation des moyens de couvercle (18) sur le conteneur de collection (9) dans l'état de transport.

5. Dispositif pour collecter de particules selon la revendication 1 à 4,
**caractérisé en ce que**
le conteneur de collection (9) a une hauteur (H) entre 0,5 cm à 5 cm, de préférence entre 0,5 cm à 2,5 cm, et/ou une largeur et/ou une longueur et/ou une extension radiale (R) entre 2 cm à 15 cm, de préférence entre 4 cm et 10 cm.

6. Dispositif pour collecter de particules selon la revendication 1 à 5,
**caractérisé en ce que**
le conteneur de collection (9) est en matériau plastique, notamment d'un matériau plastomère, et/ou est transparent.

7. Dispositif pour collecter de particules selon la revendication 3 à 6,
**caractérisé en ce que**
les moyens de couvercle (18) sont en matériau plastique, notamment en plastomère, et/ou sont transparent.

8. Dispositif pour collecter de particules selon la revendication 1 à 7,
**caractérisé en ce que**
la surface de collection (16) et/ou les moyens d'adhésion (17) ont une coloration contrastée blanche ou noire pour un contrôle visuel optique permettant de déterminer le nombre de particules.

9. Dispositif pour collecter de particules selon la revendication 1 à 7,
**caractérisé en ce que**
le conteneur de collection (9) forme une surface d'enveloppe (21) en forme de cylindre creux ou de cône et comprenant un élément de fond et/ou un élément de niveau (20), dans lequel la surface intérieure de l'élément de fond et/ou de l'élément de niveau comprend la surface de collection (16).
